# EUROPÄISCHE PATENTSCHRIFT

(11) **EP 1 775 181 B1**
(45) Veröffentlichungstag und Bekanntmachung des Hinweises auf die Patenterteilung: **27.08.2008**
(21) Anmeldenummer: 06013686.8
(22) Anmeldetag: 01.07.2006
(51) Int. Cl.: B60R 21/34

(54) **Vorrichtung zur Verlagerung einer Haube eines Kraftfahrzeuges**
Apparatus for shifting of the hood of a motorvehicle
Dipositif pour la translation d'un capot de véhicule automobile

(30) Priorität: 15.10.2005 DE 102005054809
(43) Veröffentlichungstag der Anmeldung: 18.04.2007
(73) Patentinhaber: Kirchhoff GmbH & Co. KG., 58553 Halver (DE)
(72) Erfinder: Gust, Dr. Ing. Peter, 58849 Herscheid (DE); Schacht, Michael, 51688 Wipperfürth (DE)
(74) Vertreter: Köchling, Conrad-Joachim

(56) Entgegenhaltungen:
- DE-A1- 10 350 533
- DE-A1- 10 352 275
- DE-A1-2102004 046 16
- DE-A1-4102005 019 97

## Beschreibung

Die Erfindung betrifft eine Vorrichtung zur Verlagerung einer Haube eines Kraftfahrzeuges, insbesondere der Fronthaube, aus einer Normalgebrauchsstellung in eine Personenschutzstellung , bestehend aus einem Scharniergelenk mit einer am Fahrzeugkörper befestigten oder durch Bestandteile des Fahrzeugkörpers gebildeten ersten Koppel, einer an der Haube befestigten zweiten Koppel, mindestens einer die Koppeln verbindenden Schwinge sowie einem in einer Normalgebrauchslage befindlichen Aufstellhebel, der mit einem Ende am Fahrzeugkörper angelenkt ist, und dessen freies Ende in einem Bereich nahe der ersten Koppel liegt, wobei im Falle einer Crash-bedingten Auslösung der Aufstellhebel mit seinem freien Ende auf die zweite Koppel oder einen Bestandteil der Haube im Sinne einer Aufschwenkbewegung der Haube einwirkt und die Haube in die Personenschutzstellung verlagert.

Insbesondere aus Gründen des Fußgängerschutzes sind derartige Vorrichtungen bekannt. Im Falle des Aufpralls des Fahrzeuges auf einen Fußgänger wird der in der Normalgebrauchslage befindliche vorzugsweise vorgespannte Aufstellhebel freigegeben, so dass durch den Aufstellhebel die Haube mit ihrem der Windschutzscheibe nahen Ende hochschwenkt und mit ihrem in Fahrtrichtung vorn liegenden Ende abgesenkt wird, um die unfallbeteiligte Person möglichst weich aufzufangen.

Um nach einem solchen Fall die Haube des Fahrzeuges aus der aufgeschwenkten Personenschutzstellung in die Normalgebrauchslage zurückführen zu können, ist es erforderlich, den Aufstellhebel zurückzuverlagern und in die Normalgebrauchslage zu überführen. Hierzu sind erhebliche Kräfte aufzubringen, weil beispielsweise der Aufstellhebel in der arretierten Lage mit einem Drehmoment von ca. 100 Nm gehalten ist.

Ausgehend von diesem Stand der Technik liegt der Erfindung die Aufgabe zu Grunde, eine Vorrichtung gattungsgemäßer Art zu schaffen, die es ermöglicht, den Aufstellhebel mit geringem Kraftaufwand aus der ausgelösten Personenschutzstellung in die vorgespannte Normalgebrauchsstellung zurückzuführen.

Zur Lösung dieser Aufgabe schlägt die Erfindung vor, dass an der zweiten Koppel oder einem Bestandteil der Haube ein Reversierhebel angelenkt ist, der aus einer Nichtgebrauchslage in eine Gebrauchslage verstellbar ist, in der er an dem ausgelösten Aufstellhebel anliegt, so dass durch Verlagerung der Haube und/oder des Scharniergelenks aus der Personenschutzstellung in die Normalgebrauchsstellung der Aufstellhebel durch den Reversierhebel in die vorgespannte Normalgebrauchslage verstellbar ist, oder dass am Aufstellhebel ein Reversierhebel angelenkt ist, der aus einer Nichtgebrauchslage, in der er etwa parallel zum Reversierhebel gerichtet ist, in eine Gebrauchslage verstellbar ist, in der er vom Reversierhebel in Richtung auf einen Bestandteil der Haube oder der zweiten Koppel verschwenkt ist und sich an diesem abstützt, so dass durch Verlagerung der Haube und/oder des Scharniergelenks aus der Personenschutzstellung in die Normalgebrauchsstellung der Aufstellhebel durch den Reversierhebel in die vorgespannte Normallage verstellbar ist.

Durch eine derartige Anordnung wird erreicht, dass das Zurückführen des Aufstellhebels über den Reversierhebel und die damit verbundene Haube erfolgen kann, wodurch ein großer Hebelarm für das Zurückführen des Aufstellhebels zur Verfügung steht. Hierdurch wird die aufzuwendende Kraft erheblich heruntergesetzt, so dass es in einfacher Weise einer Person möglich ist, den Aufstellhebel in die Normalgebrauchsstellung zurückzuführen.

Des Weiteren kann durch die alternative Anordnung erreicht werden, dass auch hierbei das Zurückführen des Aufstellhebels mittels des Reversierhebels und die sich am Ende des Reversierhebels abstützende Haube oder zweite Koppel erfolgen kann, wodurch ebenfalls ein großer Hebelarm für das Zurückführen des Aufstellhebels zur Verfügung steht.

Um eine Hilfestellung bei der Positionierung des Reversierhebels in der Arbeitsstellung zu erreichen und zudem sicherzustellen, dass der Reversierhebel nicht zu weit aufschwenkt, ist vorgesehen, dass der Schwenkweg des Reversierhebels begrenzt ist.

Zudem ist bevorzugt vorgesehen, dass der Reversierhebel manuell verschwenkbar ist.

Es ist auch denkbar, den Reversierhebel durch mechanische Stellglieder oder dergleichen zu betätigen, jedoch ist die manuelle Verschwenkbarkeit eine äußerst einfache und kostengünstige Lösung.

Zudem kann vorgesehen sein, dass das freie Ende des Reversierhebels und/oder der Rücken des Aufstellhebels als Gleitfläche ausgebildet ist.

Bei der Zurückführung des Aufstellhebels in die Normalgebrauchslage kann damit das freie Ende des Reversierhebels auf dem Rücken des Aufstellhebels entsprechend dem Bewegungsablauf gleiten, was für die Handhabung und die Krafteinwirkung vorteilhaft ist.

Bei der alternativen Ausführungsform gemäß Anspruch 1 kann vorgesehen sein, dass das freie Ende des Reversierhebels und/oder die Abstützfläche für den Reversierhebel an dem Bestandteil der Haube oder an der zweiten Koppel als Gleitfläche ausgebildet ist.

Zudem kann insbesondere hierbei vorgesehen sein, dass der Reversierhebel durch eine Feder in die Gebrauchslage verlagerbar ist.

Auch kann insbesondere bei dieser alternativen Ausbildung vorgesehen sein, dass der Reversierhebel mit seinem freien Ende oder nahe dieses Endes an einer Schwinge des Scharniergelenks angelenkt ist.

Um eine Möglichkeit zu schaffen, durch die der Reversierhebel nach Auslösung des Aufstellhebels selbständig ohne manuelle Beeinflussung eines Bedieners aus der Nichtgebrauchslage in die Gebrauchslage verstellt wird, wird vorgeschlagen, dass die zweite Koppel an der Haube oder einem Bestandteil der Haube angelenkt ist und der an der Haube oder einem Bestandteil der Haube angelenkte Reversierhebel durch ein Haltemittel bei in Normalgebrauchslage befindlichen Teilen in der Nichtgebrauchslage gehalten ist, wobei der Reversierhebel bei in Personenschutzlage verstellten Teilen durch die zweite Koppel von dem Haltemittel gelöst ist und in die Gebrauchslage verschwenkt oder verschwenkbar ist.

Hierdurch wird erreicht, dass der Reversierhebel bei Auslösung des Aufstellhebels selbständig, ohne manuelle Beeinflussung, in die Gebrauchslage verschwenkt wird, so dass durch entsprechenden Druck auf die Haube der Aufstellhebel durch den Reversierhebel wieder in die Grundstellung zurückgeführt werden kann. Anschließend kann der Benutzer dann den Reversierhebel manuell wiederum in die Nichtgebrauchslage verlagern.

Bevorzugt ist dabei vorgesehen, dass die zweite Koppel in Richtung auf den Reversierhebel verlängert ist und diese Verlängerung an der Haube oder einem Bestandteil der Haube angelenkt ist, dass der Reversierhebel mit Abstand von der Anlenkstelle der Verlängerung ebenfalls an der Haube oder einem Bestandteil der Haube angelenkt ist, wobei das freie Ende des Reversierhebels die Anlenkstelle der Verlängerung in der Nichtgebrauchslage übergreift und im übergreifenden Endbereich mittels des Haltemittels gehalten ist, so dass bei in Personenschutzstellung verlagerter Haube die Verlängerung der zweiten Koppel den Reversierhebel vom Haltemittel trennt.

Besonders bevorzugt ist vorgesehen, dass das Haltemittel ein federnder Halteclip ist, der mit seinen federnden Schenkeln in der Nichtgebrauchslage das freie Ende des Reversierhebels arretiert, wobei zwischen einer Basis des Halteclips, von der die federnden Schenkel abragen, und dem freien Ende des Reversierhebels ein Teil der Verlängerung der zweiten Koppel angeordnet ist, der bei Verstellung der Haube in die Personenschutzlage den Reversierhebel aus dem Halteclip drängt.

Vorteilhafte Weiterbildungen sind in den Ansprüchen 11 bis 16 angegeben.

Ausführungsbeispiele der Erfindung sind in der Zeichnung dargestellt und im Folgenden näher beschrieben.

Es zeigt:
- Figur 1: die Vorrichtung in der Normalgebrauchslage;
- Figur 2: die Vorrichtung bei betätigtem Aufstellhebel;
- Figur 3: den Beginn des Zurückführvorganges in die Normalgebrauchsstellung
- Figur 4: eine Zwischenposition beim Überführen In die Normalgebrauchsstellung;
- Figur 5: die Vorrichtung bei Erreichen der Normalgebrauchsstellung.
- Figur 6: wesentliche Elemente der Vorrichtung zur Verlagerung einer Haube eines Kraftfahrzeuges in der Normalgebrauchslage in Seitenansicht;
- Figur 7: desgleichen in einer ausschnittsweise vergrößerten Darstellung;
- Figur 8: die Vorrichtung nach einer crashbedingten Auslösung in der Fußgängerschutzstellung;
- Figur 9: desgleichen in der Reversierstellung;
- Figur 10: die Vorrichtung in einer Position beim Beendigen des Reversiervorganges;
- Figur 11: die Vorrichtung wieder in der Ausgangsposition;
- Figur 12: Einzelelemente der Vorrichtung schematisch gezeigt in der Grundstellung;
- Figur 13: desgleichen in der ausgelösten Fußgängerschutzstellung;
- Figur 14: in arretierter Stellung zur Zurückführung des Aufstellhebels in die Grundstellung;
- Figur 15: die Vorrichtung in der Reversierstellung.

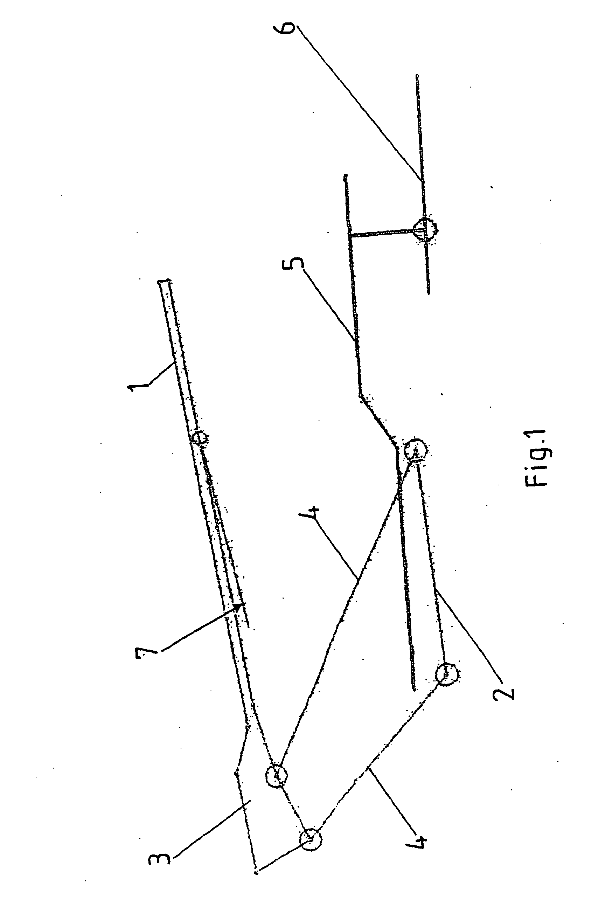

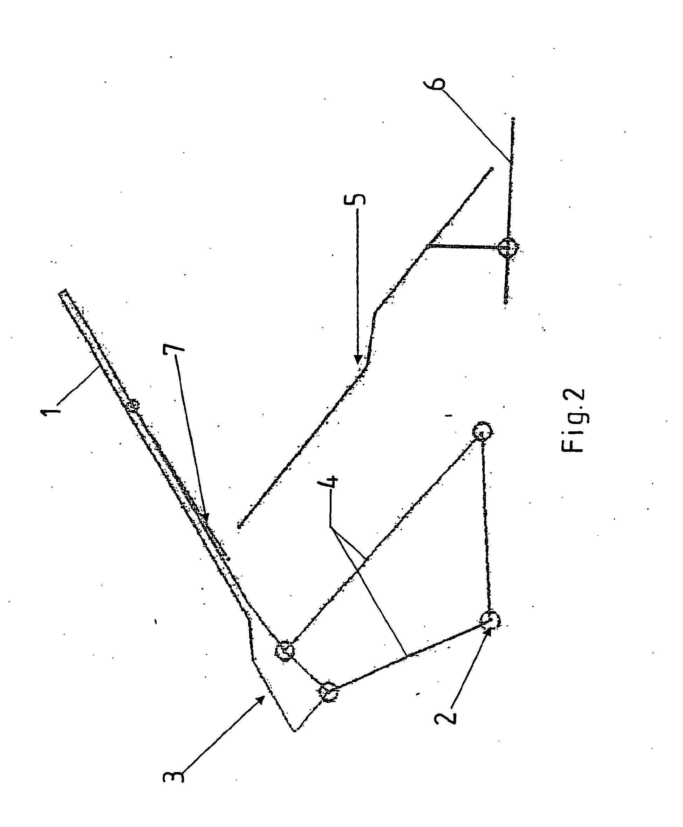

In der Zeichnung ist eine Vorrichtung zur Verlagerung einer Haube eines Kraftfahrzeuges, insbesondere der Fronthaube eines Kraftfahrzeuges gezeigt. Die Anordnung ist so getroffen, dass sich das Vorderende des Fahrzeuges in den Zeichnungsfiguren quasi links befindet, während die Fahrgastzelle des Fahrzeuges sich rechts befindet. An dem Bestandteil 1 der Vorrichtung kann beispielsweise die Haube befestigt sein, die aus einer Schließlage, wie sie in Figur 1 veranschaulicht ist, in eine Personenschutzlage entgegen dem Uhrzeigersinn verlagerbar ist, wie dies in Figur 2 verdeutlicht ist.

Die Vorrichtung besteht im Wesentlichen aus einem Scharniergelenk, welches mit einer ersten Koppel 2 am Fahrzeugkörper befestigt ist und mit einer zweiten Koppel 3 an der Haube befestigt sein kann. Im Ausführungsbeispiel ist das Scharniergelenk als Viergelenkscharnier mit zwei Schwingen 4 ausgebildet. Des Weiteren ist ein vorgespannt in einer Normalgebrauchslage arretierter Aufstellhebel 5 angeordnet, der am Fahrzeugkörper, beispielsweise bei 6, angelenkt ist, wobei der Aufstellhebel 5 durch eine Feder oder dergleichen vorgespannt gehalten ist und in der Lage gemäß Figur 1 arretiert ist. Im Crash-Fall wird die Arretierung gelöst, so dass der Aufstellhebel 5 im Uhrzeigersinn nach oben schwenkt, wie in Figur 2 veranschaulicht. Hierdurch wird das Element 1, 3 entgegen dem Uhrzeigersinn verschwenkt und die Personenschutzstellung der Haube eingestellt.

Das freie Ende des Aufstellhebels 5 liegt im Nichtgebrauchsfall nahe der ersten Koppel 2, wie in Figur 1 veranschaulicht.

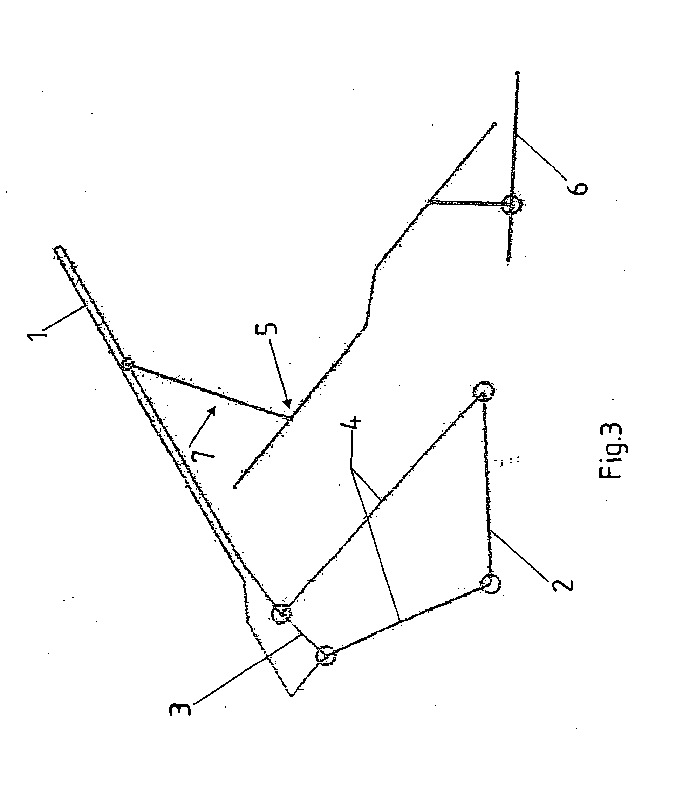

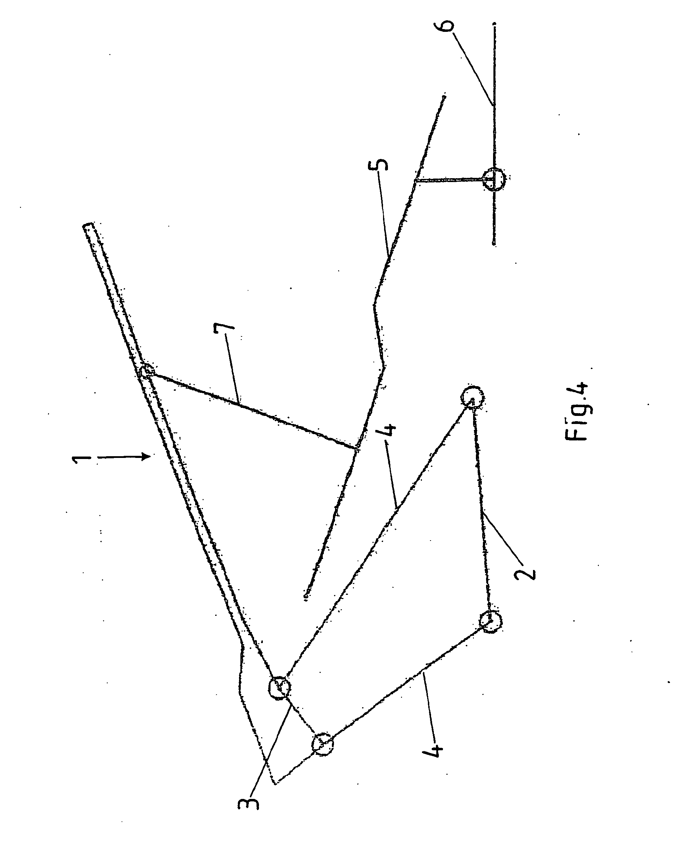

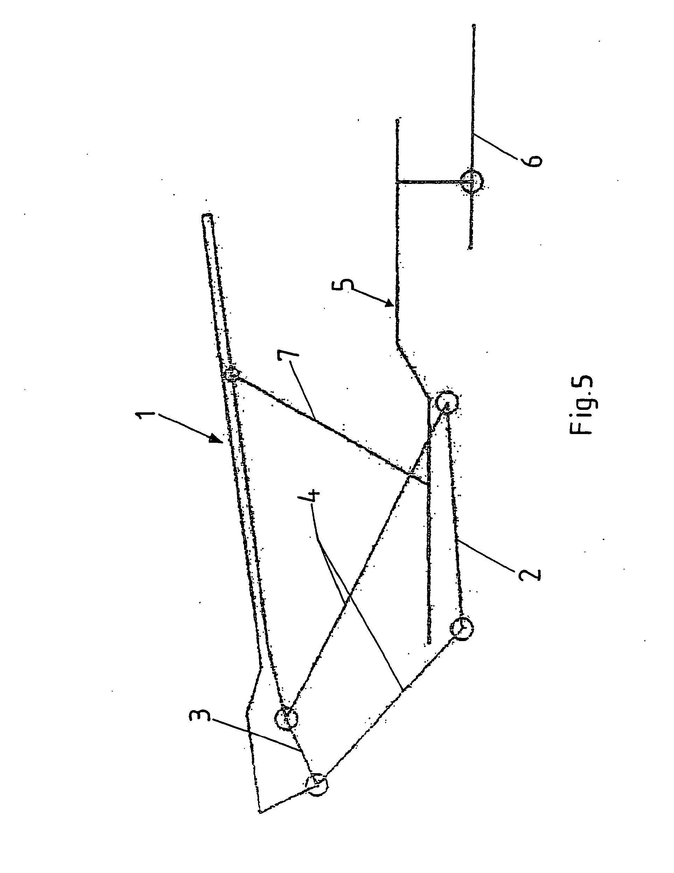

Um nach dem Auslösen des Aufstellhebels 5 ein einfaches Zurückführen in die Ausgangposition entgegen der Vorspannkraft der Feder zu gewährleisten, ist eine Hilfsvorrichtung vorgesehen, die aus einem an der Haube beziehungsweise dem Bestandteil 1 befestigten Reversierhebel 7 besteht. Dieser ist aus der in Figur 1 gezeigten Nichtgebrauchslage in eine in Figur 3 bis 5 gezeigte Gebrauchslage verschwenkbar, in der er auf das freie Ende des Aufstellhebels 5 einwirkt, so dass durch Verlagerung der Bestandteile 1, 3 (Verschwenkung im Uhrzeigersinn) aus der Personenschutzstellung gemäß Figur 3 über die Bewegungsabläufe gemäß Figur 4 und 5 wieder die Position gemäß Figur 1 einstellbar ist. Vorzugsweise ist der Schwenkweg des Reversierhebels 7 begrenzt. Zudem ist der Reversierhebel 7 vorzugsweise manuell betätigbar. Bei Verstellung des Reversierhebels 7 in Position gemäß Figur 3 gleitet dessen freies Ende auf dem Rücken des Aufstellhebels 5 während der Bewegung gemäß Figur 4 und 5. Hat der Aufstellhebel 5 seine Ursprungsposition erreicht und ist in dieser Position arretiert, kann der Reversierhebel 7 wieder in die Ausgangsposition gemäß Figur 1 zurückverlagert werden.

Bei der alternativen Ausführungsform, die in Anspruch 1 angegeben ist, kann der Reversierhebel beispielsweise nahe des freien Endes des Aufstellhebels 5 angelenkt sein, so dass er sich beispielsweise in der Ansicht gemäß Figur 1 parallel zum auslaufenden freien Ende des Aufstellhebels 5 erstreckt. Bei einer crashbedingten Auslösung des Aufstellhebels kann dieser in eine Position verstellt werden, wie sie beispielsweise in Figur 2 veranschaulicht ist, wobei aber der Aufstellhebel 5 auch beispielsweise im Mittelbereich der Schwinge 4, die in der Zeichnung rechts dargestellt ist, angelenkt sein kann, um auf diese Schwinge einzuwirken und damit die entsprechende Verstellung der Haube 1 zu bewirken. Der an dem Aufstellhebel 5 angelenkte Reversierhebel 7 kann manuell oder auch mit Hilfe einer Aufstellfeder gegenüber dem Aufstellhebel 5 verlagert werden, so dass er in Richtung auf das Teil 1 oder das Teil 3 gegenüber dem Aufstellhebel 5 voreilend verlagert ist. Soll nun das Teil 1 wieder in die Grundstellung zurückgeführt werden, so drückt das Teil 1 oder ein Bestandteil der zweiten Koppel 3 auf den Reversierhebel und dieser wiederum auf den Aufstellhebel 5, so dass dieser durch Bewegung der Haube 1 oder dergleichen in die Grundstellung zurückgedrückt werden kann. Auch dabei ist der Hebelarm zur Betätigung erheblich vergrößert, so dass eine leicht gängige Betätigung erreicht ist.

In der Nichtgebrauchslage ist der Aufstellhebel arretiert gehalten, wobei die Arretierung bei Crasheinwirkung sich löst und der Aufstellhebel 5 unter der Wirkung einer entsprechend starken Feder in die Gebrauchslage zwangsverstellt wird.

In der Nichtgebrauchslage kann ebenso gemäß der alternativen Ausführungsform der Reversierhebel 7 unter Vorspannung der Aufschwenkfeder, die für diesen Hebel vorgesehen ist, arretiert gehalten sein, wobei diese Arretierung durch Bestandteile des Scharniergelenks und/oder der Haube bewerkstelligt werden kann. Die Arretierung löst sich selbstständig, sobald der Aufstellhebel 5 ausgelöst und das Scharniergelenk zum Zwecke der Verstellung der Haube oder dergleichen verschwenkt ist.

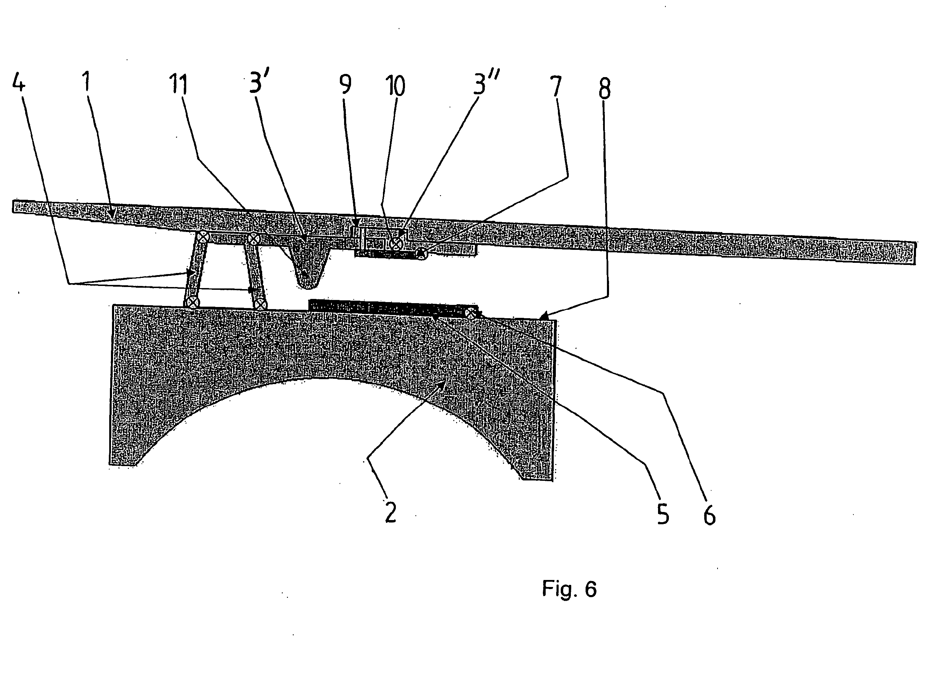

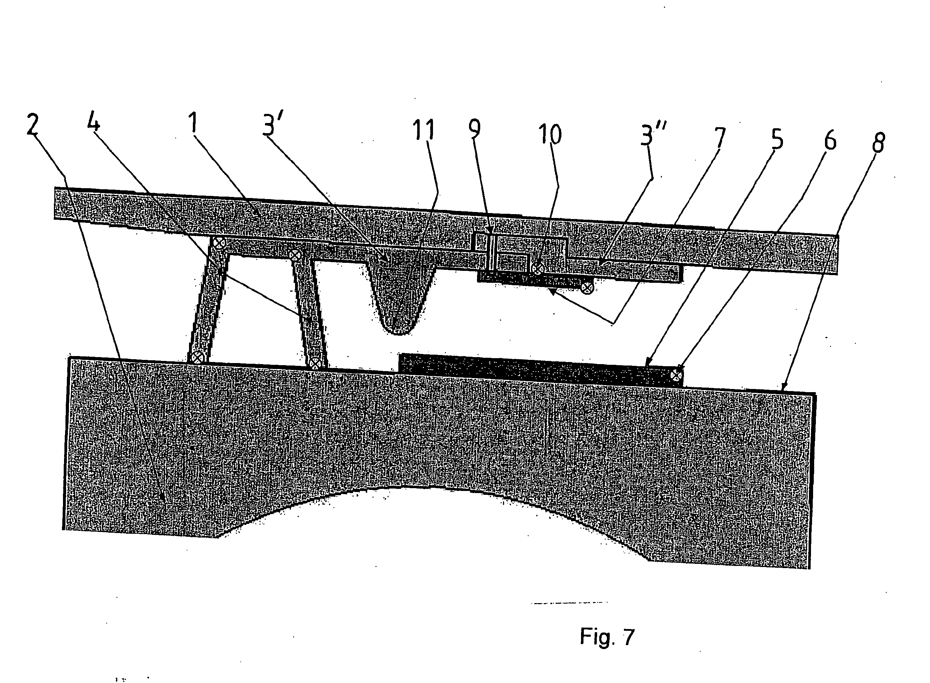

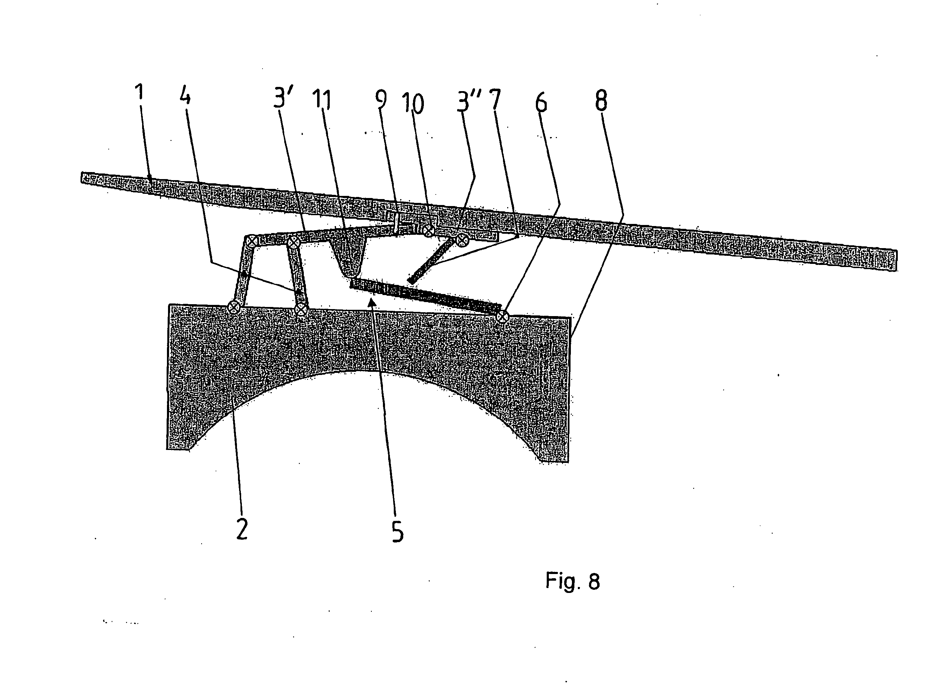

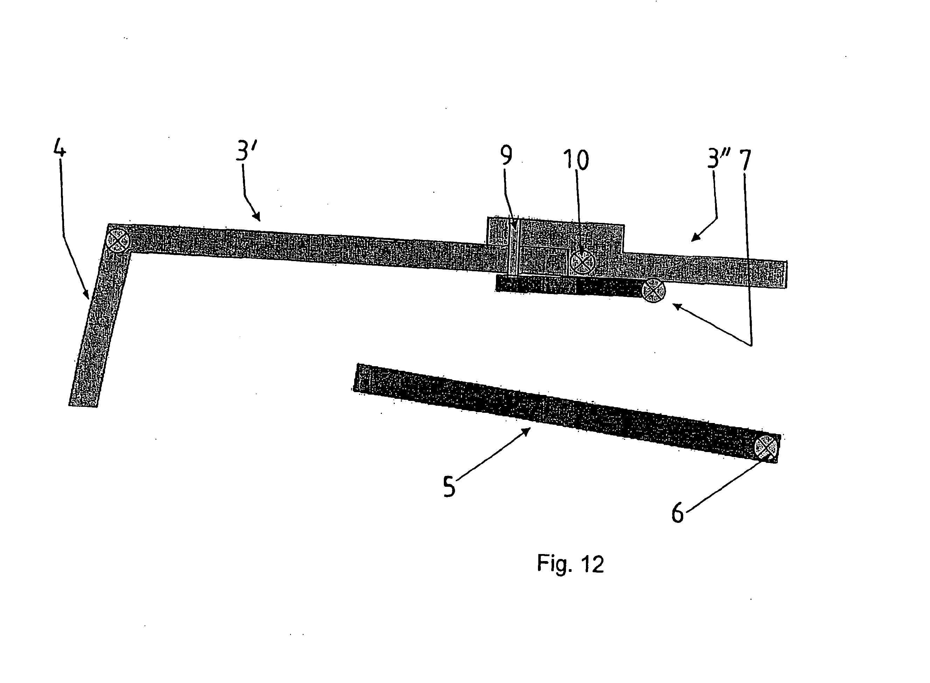

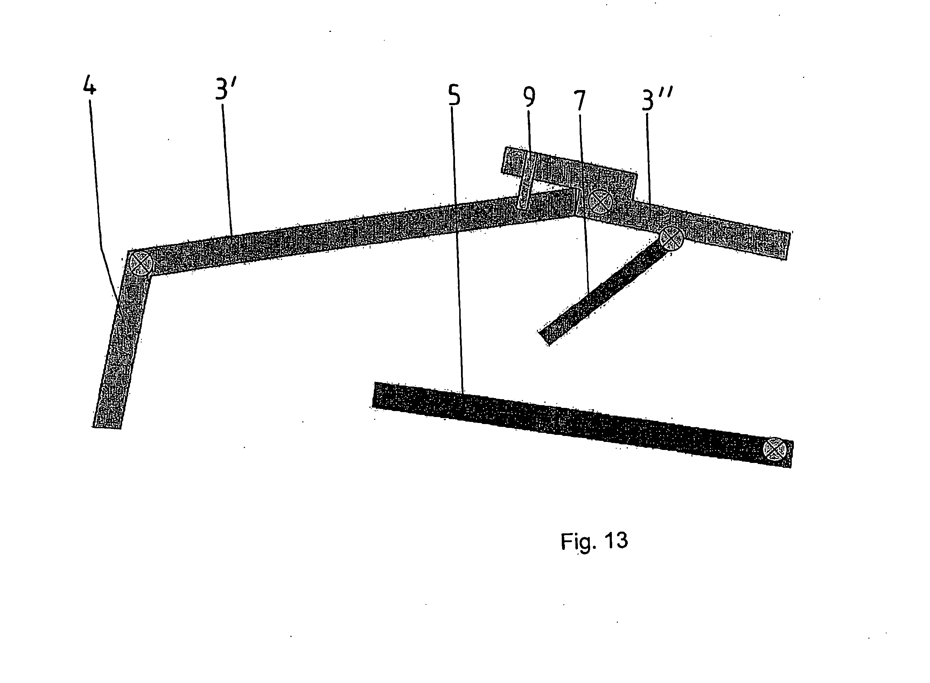

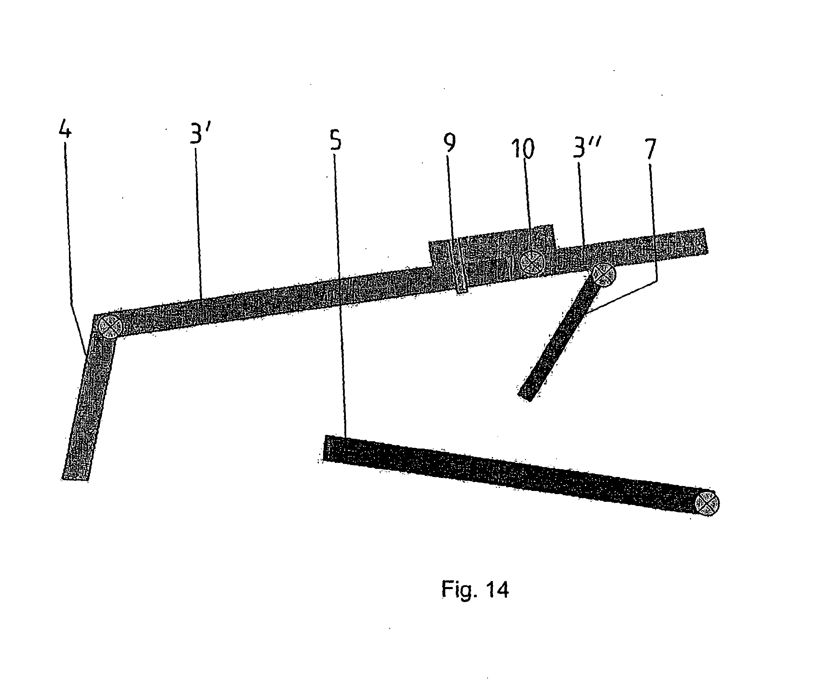

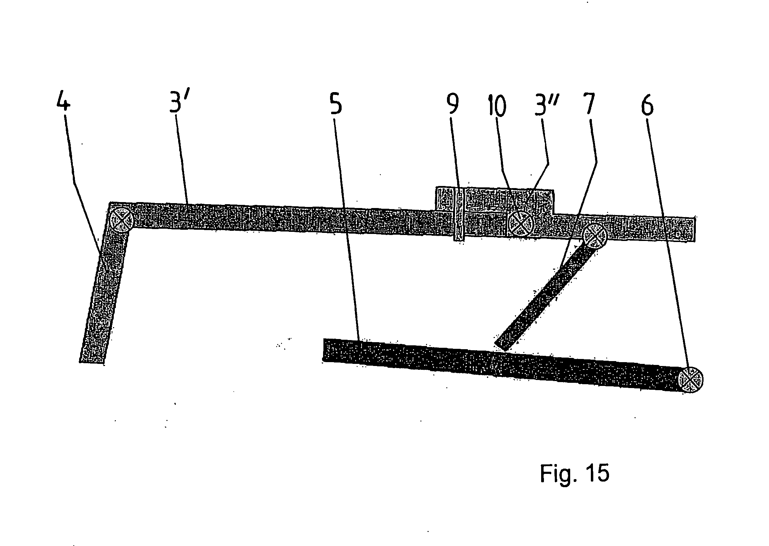

In den Figuren 6 bis 15 sind wesentliche Elemente der Vorrichtung zur Verlagerung einer Haube eines Kraftfahrzeuges, insbesondere der Fronthaube eines Kraftfahrzeuges gezeigt. Die Anordnung ist so getroffen, dass sich das Vorderende des Fahrzeuges in den Fahrzeugfiguren quasi links befindet, während die Fahrgastzelle des Fahrzeuges sich rechts befindet. An dem Bestandteil 1 der Vorrichtung kann beispielsweise die Haube befestigt sein oder das Teil 1 kann durch die Haube gebildet sein, die aus einer Schließlage, wie sie in Figur 6 veranschaulicht ist, in eine Öffnungslage verstellt werden kann. Dazu ist beispielsweise das linke Ende der Haube, die gegebenenfalls an dem Bestandteil 1 befestigt ist, an der Karosseriestruktur lösbar gehalten, um die Haube auch in eine Öffnungsstellung bewegen zu können, in der der Motorraum oder dergleichen, der von der Haube abgedeckt ist, zugänglich gemacht werden kann. Für eine Personenschutzfunktion ist die Haube und damit der Bestandteil 1 in eine Position verlagerbar, wie sie in Figur 8 beispielsweise veranschaulicht ist.

Die Vorrichtung besteht im Wesentlichen aus einem Scharniergelenk, welches an einer ersten Koppel 2 am Fahrzeugkörper befestigt ist. Die Koppel 2 kann beispielsweise durch einen Kotflügel oder dergleichen gebildet sein, wobei bei 8 ein die beiden Kotflügel verbindender Holm angedeutet ist. Eine zweite Koppel 3', 3'' kann an der Haube befestigt sein oder einem Bestandteil 1 der Haube. Im Ausführungsbeispiel ist das Scharniergelenk als Viergelenkscharnier mit zwei Schwingen 4 ausgebildet. Sämtliche Gelenke, auch die noch später beschriebenen, sind parallel zur Schwenkachse der entsprechenden Haube ausgerichtet, also quer zur Fahrzeuglängserstreckung und im Wesentlichen horizontal gerichtet. Zudem ist ein vorzugsweise vorgespannt in einer Normalgebrauchslage arretierter Aufstellhebel 5 angeordnet, der am Fahrzeugkörper, beispielsweise bei 6, angelenkt ist, wobei der Aufstellhebel 5 beispielsweise durch eine Feder oder ein Stellglied vorgespannt gehalten ist und in der Lage gemäß Figur 6 arretiert ist. Die Gelenkstelle 6 des Aufstellhebels 5 ist am den Schwingen 4 abgewandten Ende des Aufstellhebels vorgesehen, wobei dessen freies Ende bis nahe der Schwingen 4 reicht.

Im Crashfall, wird wie beispielsweise in Figur 8 gezeigt, die Arretierung des Aufstellhebels 5 gelöst, so dass der Aufstellhebel 5 im Uhrzeigersinn nach oben schwenkt, wie in Figur 3 veranschaulicht. Hierdurch wird die Haube und das mit der Haube verbundene Bestandteil 1 nach oben geschwenkt und in die Personenschutzstellung verstellt.

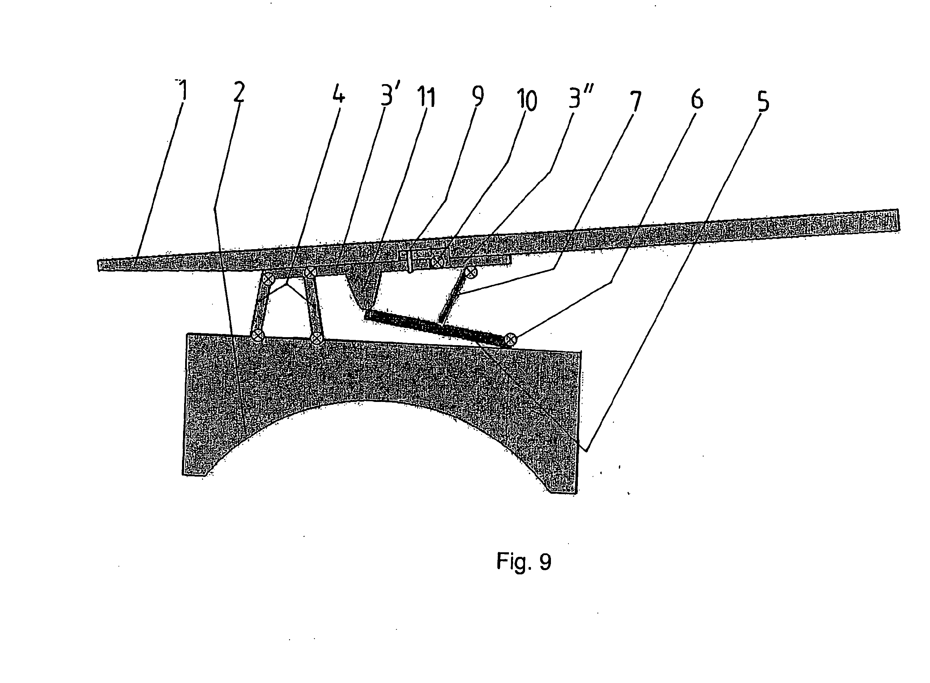

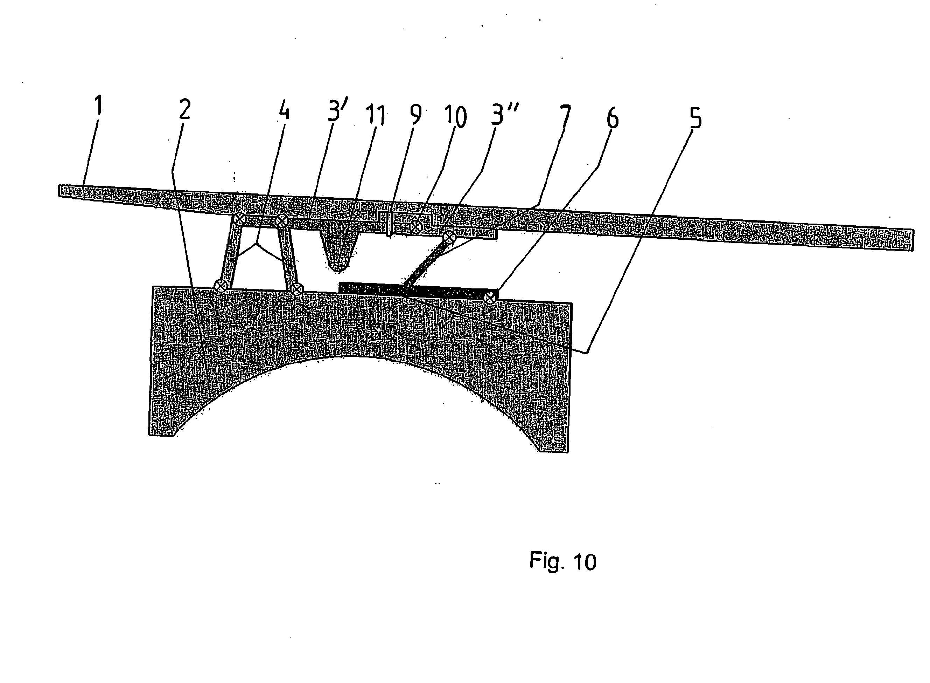

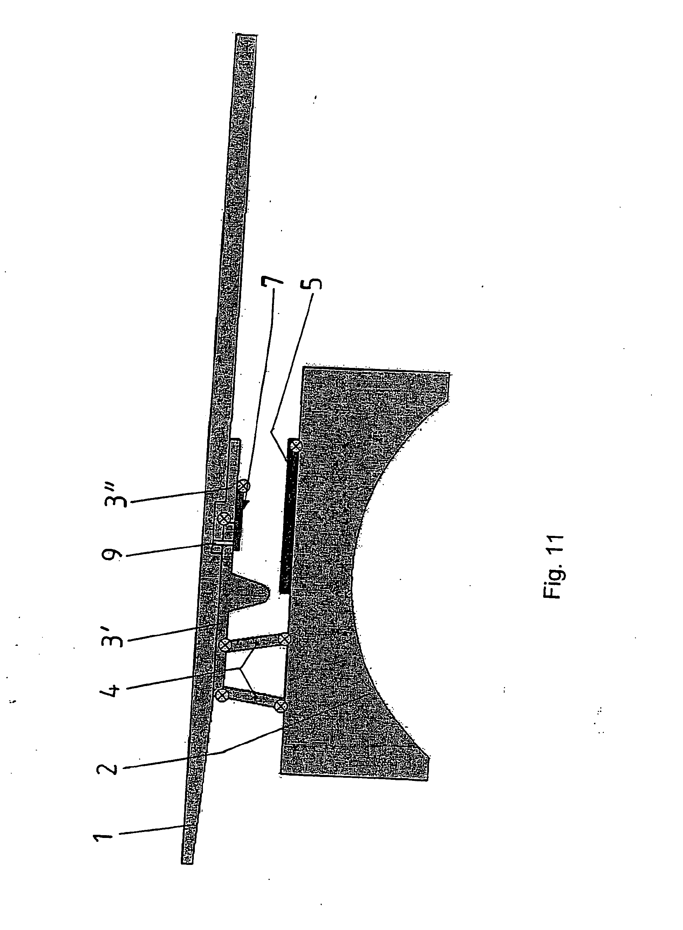

Um nach den Auslösen des Aufstellhebels 5 ein einfaches Zurückführen in die Ausgangsposition vorzugsweise entgegen der Vorspannkraft der auf den Aufstellhebel 5 wirkenden Feder zu gewährleisten, ist eine Hilfsvorrichtung vorgesehen, die aus einem an der Haube oder einem Bestandteil 1 der Haube befestigten Reversierhebel 7 besteht. Dieser ist aus der beispielsweise in Figur 6 nicht gezeigten Nichtgebrauchslage in eine in beispielsweise in den Figuren 8 bis 10 gezeigte Gebrauchslage schwenkbar, in der er auf den Aufstellhebel 5 vorzugsweise nahe dessen freien Endes einwirkt, so dass durch Verlagerung des Bestandteiles 1 der Haube gemeinsam mit der Haube eine Verschwenkung aus der Personenschutzstellung gemäß Figur 8 über die Bewegungsabläufe gemäß Figur 9 und 10 wieder in die Position gemäß Figur 6 einstellbar ist. Vorzugsweise wird dazu die an dem Bestandteil 1 befestigte Haube am vorderen Ende aus ihrem Festlager gelöst und angehoben und nachfolgend die Haube abgesenkt, wodurch das Zurückführen des Aufstellhebels 5 mittels des Reversierhebels 7 erfolgen kann. Vorzugsweise ist der Schwenkweg des Reversierhebels 7 begrenzt. Das Zurückführen des Reversierhebels 7 aus der Position gemäß Figur 10 in die Position gemäß Figur 11 erfolgt manuell.

Als Besonderheit ist die zweite Koppel 3' an der Haube oder einem Bestandteil 1 der Haube angelenkt oder einem weiteren Bestandteil, der mit dem Bestandteil 1 fest verbunden ist. Der an der Haube oder einem Bestandteil 1 der Haube oder einem anderen Bestandteil angelenkte Reversierhebel 7 ist durch ein Haltemittel 9 in der Nichtgebrauchslage gehalten, wie beispielsweise in Figur 6 ersichtlich. Dabei wird der Reversierhebel 7 bei in Personenschutzlage gemäß Figur 8 verstellten Teilen durch die zweite Koppel 3' von dem Haltemittel 9 gelöst, so dass er in die Gebrauchslage verschwenken kann, beispielsweise lediglich unter Schwerkrafteinwirkung oder unterstützt durch eine Federkraft.

Die zweite Koppel 3' ist in Richtung auf den Reversierhebel 7 verlängert, wobei diese Verlängerung an der Haube oder einem Bestandteil der Haube 1, insbesondere dem Bestandteil 3'', angelenkt ist. Die Anlenkstelle ist bei 10 angegeben. Der Reversierhebel 7 ist mit Abstand von der Anlenkstelle 10 und auf der den Schwingen 4 abgewandten Seite der Verlängerung ebenfalls an der Haube oder einem Bestandteil der Haube oder dem Teil 3'' angelenkt, wobei das freie Ende des Reversierhebels 7 die Anlenkstelle 10 der Verlängerung der zweiten Koppel 3' in der Nichtgebrauchslage übergreift, wie insbesondere in Figur 6 ersichtlich ist, und im übergreifenden Endbereich mittels des Haltemittels 9 gehalten ist.

Hierdurch wird erreicht, dass bei in Personenschutzstellung verlagerte Haube die Verlängerung der zweiten Koppel 3' den Reversierhebel aus dem Haltemittel 9 drängt und von diesem Haltemittel 9 trennt.

Das Haltemittel 9 kann beispielsweise ein federnder Halteclip sein, der mit seinen federnden Schenkeln in der Nichtgebrauchslage das freie Ende des Reversierhebels 7 arretiert, wobei zwischen einer Basis des Halteclips, von der die federnden Schenkel abragen, und dem freien Ende des Reversierhebels 7 ein Teil der Verlängerung der zweiten Koppel 3' angeordnet ist, der bei Verstellung der Haube in die Personenschutzlage den Reversierhebel 7 aus dem Halteclip drängt. Durch diese Anordnung wird erreicht, dass bei Auslösung des Aufstellhebels 5 und damit Verstellung der Elemente in die Personenschutzlage der Reversierhebel 7 zwangsläufig freigegeben wird, ohne dass es einer Manipulation bedarf.

An der Verlängerung der zweiten Koppel 3' ist zwischen dem Anlenkbereich der Schwingen 4 und dem Bereich, an dem das freie Ende des Reversierhebels 7 in der Nichtgebrauchslage positioniert ist, ein Vorsprung 11 vorgesehen, der in Richtung des Aufstellhebels 5 vorragt und an dem sich der Aufstellhebel 5 in der ausgelösten Stellung abstützt, um die Teile in die Personenschutzlage zu verstellen.

Das Teil 3" kann Bestandteil des Teiles 1 sein oder ein am Teil 1 befestigtes zusätzliches Element, welches bei einer Gelenkverbindung (Anlenkstelle 10) mit der Verlängerung der zweiten Koppel 3' gelenkig verbunden ist.

Gegebenenfalls kann das Haltemittel 9 auch dazu dienen, die Verlängerung der zweiten Koppel 3' an dem Teil 3" zu arretieren, wobei auch diese Arretierung bei Auslösung des Aufstellhebels 5 durch die Krafteinwirkung des Aufstellhebels 5 auf die zweite Koppel 3', insbesondere deren Vorsprung 11, gelöst wird.

Die Erfindung ist nicht auf das Ausführungsbeispiel beschränkt, sondern im Rahmen der Offenbarung vielfach variabel.

## Patentansprüche (Patentansprüche für folgende(n) Vertragsstaat(en): FR, GB, IT)

1. Vorrichtung zur Verlagerung einer Haube eines Kraftfahrzeuges, insbesondere der Fronthaube, aus einer Normalgebrauchsstellung in eine Personenschutzstellung , bestehend aus einem Scharniergelenk mit einer am Fahrzeugkörper befestigten oder durch Bestandteile des Fahrzeugkörpers gebildeten ersten Koppel (2), einer an der Haube befestigten zweiten Koppel (3), mindestens einer die Koppeln (2, 3) verbindenden Schwinge (4) sowie einem in einer Normalgebrauchslage befindlichen Aufstellhebel (5), der mit einem Ende am Fahrzeugkörper (6) angelenkt ist und dessen freies Ende in einem Bereich nahe der ersten Koppel (2) liegt, wobei im Falle einer Crash-bedingten Auslösung der Aufstellhebel (5) mit seinem freien Ende auf die zweite Koppel (3) oder einen Bestandteil (1) der Haube im Sinne einer Aufschwenkbewegung der Haube einwirkt und die Haube in die Personenschutzstellung verlagert, **dadurch gekennzeichnet, dass** an der zweiten Koppel (3) oder einem Bestandteil (1) der Haube ein Reversierhebel (7) angelenkt ist, der aus einer Nichtgebrauchslage in eine Gebrauchslage verstellbar ist, in der er an dem ausgelösten Aufstellhebel (5) anliegt, so dass durch Verlagerung der Haube und/oder des Scharniergelenks aus der Personenschutzstellung in die Normalgebrauchsstellung der Aufstellhebel (5) durch den Reversierhebel (7) in die vorgespannte Normalgebrauchslage verstellbar ist, oder dass am Aufstellhebel (5) ein Reversierhebel (7) angelenkt ist, der aus einer Nichtgebrauchslage, in der er etwa parallel zum Reversierhebel (7) gerichtet ist, in eine Gebrauchslage verstellbar ist, in der er vom Reversierhebel in Richtung auf einen Bestandteil der Haube (1) oder der zweiten Koppel (3) verschwenkt ist und sich an diesem abstützt, so dass durch Verlagerung der Haube und/oder des Scharniergelenks aus der Personenschutzstellung in die Normalgebrauchsstellung der Aufstellhebel durch den Reversierhebel (7) in die vorgespannte Normallage verstellbar ist.

2. Vorrichtung nach Anspruch 1, **dadurch gekennzeichnet, dass** der Schwenkweg des Reversierhebels (7) begrenzt ist.

3. Vorrichtung nach Anspruch 1 oder 2, **dadurch gekennzeichnet, dass** der Reversierhebel (7) manuell verschwenkbar ist.

4. Vorrichtung nach einem der Ansprüche 1 bis 3, **dadurch gekennzeichnet, dass** das freie Ende des Reversierhebels (7) und/oder der Rücken des Aufstellhebels (5) als Gleitfläche ausgebildet ist.

5. Vorrichtung nach einem der Ansprüche 1 bis 3, **dadurch gekennzeichnet, dass** das freie Ende des Reversierhebels (7) und/oder die Abstützfläche für den Reversierhebel (7) an dem Bestandteil der Haube (1) oder an der zweiten Koppel (3) als Gleitfläche ausgebildet ist.

6. Vorrichtung nach einem der Ansprüche 1 bis 5, **dadurch gekennzeichnet, dass** der Reversierhebel (7) durch eine Feder in die Gebrauchslage verlagerbar ist.

7. Vorrichtung nach einem der Ansprüche 1 bis 6, **dadurch gekennzeichnet, dass** der Reversierhebel (7) mit seinem freien Ende oder nahe dieses Endes an einer Schwinge (4) des Scharniergelenks angelenkt ist.

8. Vorrichtung nach Anspruch 1, **dadurch gekennzeichnet, dass** die zweite Koppel (3') an der Haube oder einem Bestandteil (1) der Haube angelenkt ist und der an der Haube oder einem Bestandteil (1) der Haube angelenkte Reversierhebel (7) durch ein Haltemittel (9) bei in Normalgebrauchslage befindlichen Teilen in der Nichtgebrauchslage gehalten ist, wobei der Reversierhebel (7) bei in Personenschutzlage verstellten Teilen durch die zweite Koppel (3') von dem Haltemittel (9) gelöst ist und in die Gebrauchslage verschwenkt oder verschwenkbar ist.

9. Vorrichtung nach Anspruch 8, **dadurch gekennzeichnet, dass** die zweite Koppel (3') in Richtung auf den Reversierhebel (7) verlängert ist und diese Verlängerung an der Haube oder einem Bestandteil (1) der Haube angelenkt ist, dass der Reversierhebel (7) mit Abstand von der Anlenkstelle (10) der Verlängerung ebenfalls an der Haube oder einem Bestandteil (1) der Haube angelenkt ist, wobei das freie Ende des Reversierhebels (7) die Anlenkstelle (10) der Verlängerung in der Nichtgebrauchslage übergreift und im übergreifenden Endbereich mittels des Haltemittels (9) gehalten ist, so dass bei in Personenschutzstellung verlagerter Haube die Verlängerung der zweiten Koppel (3) den Reversierhebel (7) vom Haltemittel (9) trennt.

10. Vorrichtung nach Anspruch 8 oder 9, **dadurch gekennzeichnet, dass** das Haltemittel (9) ein federnder Halteclip ist, der mit seinen federnden Schenkeln in der Nichtgebrauchslage das freie Ende des Reversierhebels (7) arretiert, wobei zwischen einer Basis des Halteclips, von der die federnden Schenkel abragen, und dem freien Ende des Reversierhebels (7) ein Teil der Verlängerung der zweiten Koppel (3') angeordnet ist, der bei Verstellung der Haube in die Personenschutzlage den Reversierhebel (7) aus dem Halteclip drängt.

11. Vorrichtung nach einem der Ansprüche 8 bis 10, **dadurch gekennzeichnet, dass** der Schwenkweg des Reversierhebels (7) begrenzt ist.

12. Vorrichtung nach einem der Ansprüche 8 bis 11, **dadurch gekennzeichnet, dass** der Reversierhebel (7) aus der Personenschutzstellung in die Normalgebrauchsstellung manuell verschwenkbar ist.

13. Vorrichtung nach einem der Ansprüche 8 bis 12, **dadurch gekennzeichnet, dass** das freie Ende des Reversierhebels (7) und/oder der Rücken des Aufstellhebels (5) als Gleitfläche ausgebildet ist.

14. Vorrichtung nach einem der Ansprüche 8 bis 13, **dadurch gekennzeichnet, dass** der Reversierhebel (7) durch eine Feder in die Gebrauchslage verlagerbar ist, wobei die Kraft der Feder geringer als die Haltekraft des Haltemittels (9) ist.

15. Vorrichtung nach einem der Ansprüche 9 bis 14, **dadurch gekennzeichnet, dass** an der Verlängerung der zweiten Koppel (3') zwischen dem Anlenkbereich der Schwingen (4) und dem Bereich, an dem das freie Ende des Reversierhebels (7) in der Nichtgebrauchslage positioniert ist, ein Vorsprung (11) vorgesehen ist, der in Richtung des Aufstellhebels (5) vorragt und an dem sich der Aufstellhebel (5) in der ausgelösten Stellung abstützt.

16. Vorrichtung nach einem der Ansprüche 8 bis 15, **dadurch gekennzeichnet, dass** der Aufstellhebel (5) in der Normalgebrauchslage arretiert gehalten ist und in der Auslöseposition mittels eines Stellgliedes, einer Feder oder dergleichen Stellmittels gegen die zweite Koppel (3') oder die Verlängerung der zweiten Koppel (3') gedrückt ist.

## Patentansprüche (Patentansprüche für folgende(n) Vertragsstaat(en): DE)

1. Vorrichtung zur Verlagerung einer Haube eines Kraftfahrzeuges, insbesondere der Fronthaube, aus einer Normalgebrauchsstellung in eine Personenschutzstellung , bestehend aus einem Scharniergelenk mit einer am Fahrzeugkörper befestigten oder durch Bestandteile des Fahrzeugkörpers gebildeten ersten Koppel (2), einer an der Haube befestigten zweiten Koppel (3), mindestens einer die Koppeln (2, 3) verbindenden Schwinge (4) sowie einem in einer Normalgebrauchslage befindlichen Aufstellhebel (5), der mit einem Ende am Fahrzeugkörper (6) angelenkt ist und dessen freies Ende in einem Bereich nahe der ersten Koppel (2) liegt, wobei im Falle einer Crash-bedingten Auslösung der Aufstellhebel (5) mit seinem freien Ende auf die zweite Koppel (3) oder einen Bestandteil (1) der Haube im Sinne einer Aufschwenkbewegung der Haube einwirkt und die Haube in die Personenschutzstellung verlagert, an der zweiten Koppel (3) oder einem Bestandteil (1) der Haube ein Reversierhebel (7) angelenkt ist, der aus einer Nichtgebrauchslage in eine Gebrauchslage verstellbar ist, in der er an dem ausgelösten Aufstellhebel (5) anliegt, so dass durch Verlagerung der Haube und/oder des Scharniergelenks aus der Personenschutzstellung in die Normalgebrauchsstellung der Aufstellhebel (5) durch den Reversierhebel (7) in die vorgespannte Normalgebrauchslage verstellbar ist, oder dass am Aufstellhebel (5) ein Reversierhebel (7) angelenkt ist, der aus einer Nichtgebrauchslage, in der er etwa parallel zum Reversierhebel (7) gerichtet ist, in eine Gebrauchslage verstellbar ist, in der er vom Reversierhebel in Richtung auf einen Bestandteil der Haube (1) oder der zweiten Koppel (3) verschwenkt ist und sich an diesem abstützt, so dass durch Verlagerung der Haube und/oder des Scharniergelenks aus der Personenschutzstellung in die Normalgebrauchsstellung der Aufstellhebel durch den Reversierhebel (7) in die vorgespannte Normallage verstellbar ist, **dadurch gekennzeichnet, dass** die zweite Koppel (3') an der Haube oder einem Bestandteil (1) der Haube angelenkt ist und der an der Haube oder einem Bestandteil (1) der Haube angelenkte Reversierhebel (7) durch ein Haltemittel (9) bei in Normalgebrauchslage befindlichen Teilen in der Nichtgebrauchslage gehalten ist, wobei der Reversierhebel (7) bei in Personenschutzlage verstellten Teilen durch die zweite Koppel (3') von dem Haltemittel (9) gelöst ist und in die Gebrauchslage verschwenkt oder verschwenkbar ist.

2. Vorrichtung nach Anspruch 1, **dadurch gekennzeichnet, dass** die zweite Koppel (3') in Richtung auf den Reversierhebel (7) verlängert ist und diese Verlängerung an der Haube oder einem Bestandteil (1) der Haube angelenkt ist, dass der Reversierhebel (7) mit Abstand von der Anlenkstelle (10) der Verlängerung ebenfalls an der Haube oder einem Bestandteil (1) der Haube angelenkt ist, wobei das freie Ende des Reversierhebels (7) die Anlenkstelle (10) der Verlängerung in der Nichtgebrauchslage übergreift und im übergreifenden Endbereich mittels des Haltemittels (9) gehalten ist, so dass bei in Personenschutzstellung verlagerter Haube die Verlängerung der zweiten Koppel (3) den Reversierhebel (7) vom Haltemittel (9) trennt.

3. Vorrichtung nach Anspruch 1 oder 2, **dadurch gekennzeichnet, dass** das Haltemittel (9) ein federnder Halteclip ist, der mit seinen federnden Schenkeln in der Nichtgebrauchslage das freie Ende des Reversierhebels (7) arretiert, wobei zwischen einer Basis des Halteclips, von der die federnden Schenkel abragen, und dem freien Ende des Reversierhebels (7) ein Teil der Verlängerung der zweiten Koppel (3') angeordnet ist, der bei Verstellung der Haube in die Personenschutzlage den Reversierhebel (7) aus dem Halteclip drängt.

4. Vorrichtung nach einem der Ansprüche 1 bis 3, **dadurch gekennzeichnet, dass** der Schwenkweg des Reversierhebels (7) begrenzt ist.

5. Vorrichtung nach einem der Ansprüche 1 bis 4, **dadurch gekennzeichnet, dass** der Reversierhebel (7) aus der Personenschutzstellung in die Normalgebrauchsstellung manuell verschwenkbar ist.

6. Vorrichtung nach einem der Ansprüche 1 bis 5, **dadurch gekennzeichnet, dass** das freie Ende des Reversierhebels (7) und/oder der Rücken des Aufstellhebels (5) als Gleitfläche ausgebildet ist.

7. Vorrichtung nach einem der Ansprüche 1 bis 6, **dadurch gekennzeichnet, dass** der Reversierhebel (7) durch eine Feder in die Gebrauchslage verlagerbar ist, wobei die Kraft der Feder geringer als die Haltekraft des Haltemittels (9) ist.

8. Vorrichtung nach einem der Ansprüche 2 bis 7, **dadurch gekennzeichnet, dass** an der Verlängerung der zweiten Koppel (3') zwischen dem Anlenkbereich der Schwingen (4) und dem Bereich, an dem das freie Ende des Reversierhebels (7) in der Nichtgebrauchslage positioniert ist, ein Vorsprung (11) vorgesehen ist, der in Richtung des Aufstellhebels (5) vorragt und an dem sich der Aufstellhebel (5) in der ausgelösten Stellung abstützt.

9. Vorrichtung nach einem der Ansprüche 1 bis 8, **dadurch gekennzeichnet, dass** der Aufstellhebel (5) in der Normalgebrauchslage arretiert gehalten ist und in der Auslöseposition mittels eines Stellgliedes, einer Feder oder dergleichen Stellmittels gegen die zweite Koppel (3') oder die Verlängerung der zweiten Koppel (3') gedrückt ist.

## Claims (Claims for the following Contracting State(s): FR, GB, IT)

1. Device for shifting a hood of a motor vehicle, in particular the front hood, from a normal functional position to a person-protection position, consisting of a pin joint with a first coupler (2), fastened to the vehicle body or formed by components of the vehicle body, a second coupler (3) fastened to the hood, at least one rocker (4) connecting the couples (2, 3) as well as an installation lever (5), located in a normal functional position, which with one end is hinged on the vehicle body (6) and whose free end lies in a region close to the first coupler (2), wherein if the installation lever (5) is released due to a crash the free end thereof acts on the second coupler (3) or a component (1) of the hood in the sense of an upward swivel movement of the hood, **characterized in that** a reversing lever (7), which is hinged on the second coupler (3) or a component (1) of the hood, is adjustable from a non-functional position to a functional position, in which it rests on the released installation lever (5), so that by the displacement of the hood and/or the pin joint from the person-protection position to the normal functional position, the installation lever (5) is adjustable by the reversing lever (7) to the pre-stressed normal functional position or **characterized in that** a reversing lever (7), which is hinged on the installation lever (5), is adjustable from a non-functional position, in which it is aligned approximately parallel to the reversing lever (7), to a functional position, in which it is swivelled from the reversing lever in the direction of a component of the hood (1) or the second coupler (3) and is supported on it so that by the displacement of the hood and/or the pin joint from the person-protection position to the normal functional position, the installation lever is adjustable by the reversing lever (7) in the pre-stressed normal position.

2. Device according to claim 1, **characterized in that** the swivel path of the reversing lever (7) is limited.

3. Device according to claim 1 or 2, **characterized in that** the reversing lever (7) can be swivelled manually.

4. Device according to anyone of claims 1 to 3, **characterized in that** the free end of the reversing lever (7) and/or the back of the installation lever (5) is embodied as a sliding surface.

5. Device according to anyone of claims 1 to 3, **characterized in that** the free end of the reversing lever (7) and/or the supporting surface for the reversing lever (7) on the component of the hood (1) or on the second coupler (3) is embodied as a sliding surface.

6. Device according to anyone of claims 1 to 5, **characterized in that** the reversing lever (7) can be shifted to the functional position by a spring.

7. Device according to anyone of claims 1 to 6, **characterized in that** the reversing lever (7) with its free end, or close to this end, is hinged on a rocker (4) of the pin joint.

8. Device according to claim 1, **characterized in that** the second coupler (3') is hinged on the hood or a component of (1) of the hood and the reversing lever (7), hinged on the hood or a component of (1) of the hood, is held in the non-functional position by retaining means (9) with parts located in the normal functional position, wherein the reversing lever (7) with parts adjusted in the person-protection position is released from the retaining means (9) by the second coupler (3') and is swivelled or can be swivelled to the functional position.

9. Device according to claim 8, **characterized in that** the second coupler (3') is extended in the direction of the reversing lever (7) and this extension is hinged on the hood or a component of (1) of the hood, **characterized in that** the reversing lever (7), at a distance from the hinge point (10) of the extension, is likewise hinged on the hood or a component of (1) of the hood, wherein the free end of the reversing lever (7) in the non-functional position grips over the hinge point (10) of the extension and is held in the over-gripping end region by the retaining means (9), so when the hood is shifted to the person-protection position, the extension of the second coupler (3) separates the reversing lever (7) from the retaining means (9).

10. Device according to claim 8 or 9, **characterized in that** the retaining means (9) is a resilient retaining clip, which with its resilient legs in the non-functional position locks the free end of the reversing lever (7), wherein part of the extension of the second coupler (3') is arranged between a base of the retaining clip, from which the resilient legs protrude, and the free end of the reversing lever (7), which when the hood is shifted to the person-protection position forces the reversing lever (7) out of the retaining clip.

11. Device according to anyone of claims 8 to 10, **characterized in that** the swivel path of the reversing lever (7) is limited.

12. Device according to anyone of claims 8 to 11, **characterized in that** the reversing lever (7) can be manually swivelled from the person-protection position to the normal functional position.

13. Device according to anyone of claims 8 to 12, **characterized in that** the free end of the reversing lever (7) and/or the back of the installation lever (5) is embodied as a sliding surface.

14. Device according to anyone of claims 8 to 13, **characterized in that** the reversing lever (7) can be shifted to the functional position by a spring, wherein the force of the spring is less than the retention force of the retaining means (9).

15. Device according to anyone of claims 9 to 14, **characterized in that** a projection (11), which protrudes in the direction of the installation lever (5) and on which the installation lever (5) in the released position rests, is provided on the extension of the second coupler (3') between the hinge region of the rockers (4) and the region, at which the free end of the reversing lever (7) is positioned in the non-functional position.

16. Device according to anyone of claims 8 to 15, **characterized in that** the installation lever (5) is held locked in the normal functional position and, in the released position, is pressed against the second coupler (3') or the extension of the second coupler (3') by means of an actuator, spring or similar actuating means.

## Claims (Claims for the following Contracting State(s): DE)

1. Device for shifting a hood of a motor vehicle, in particular the front hood, from a normal functional position to a person-protection position, consisting of a pin joint with a first coupler (2), fastened to the vehicle body or formed by components of the vehicle body, a second coupler (3) fastened to the hood, at least one rocker (4) connecting the couples (2, 3) as well as an installation lever (5), located in a normal functional position, which with one end is hinged on the vehicle body (6) and whose free end lies in a region close to the first coupler (2), wherein if the installation lever (5) is released due to a crash the free end thereof acts on the second coupler (3) or a component (1) of the hood in the sense of an upward swivel movement of the hood, **characterized in that** a reversing lever (7), which is hinged on the second coupler (3) or a component (1) of the hood, is adjustable from a non-functional position to a functional position, in which it rests on the released installation lever (5), so that by the displacement of the hood and/or the pin joint from the person-protection position to the normal functional position, the installation lever (5) is adjustable by the reversing lever (7) to the pre-stressed normal functional position or **characterized in that** a reversing lever (7), which is hinged on the installation lever (5), is adjustable from a non-functional position, in which it is aligned approximately parallel to the reversing lever (7), to a functional position, in which it is swivelled from the reversing lever in the direction of a component of the hood (1) or the second coupler (3) and is supported on it so that by the displacement of the hood and/or the pin joint from the person-protection position to the normal functional position, the installation lever is adjustable by the reversing lever (7) in the pre-stressed normal position, **characterized in that** the second coupler (3') is hinged on the hood or a component of (1) of the hood and the reversing lever (7), hinged on the hood or a component of (1) of the hood, is held in the non-functional position by retaining means (9) with parts located in the normal functional position, wherein the reversing lever (7) with parts adjusted in the person-protection position is released from the retaining means (9) by the second coupler (3') and is swivelled or can be swivelled to the functional position.

2. Device according to claim 1, **characterized in that** the second coupler (3') is extended in the direction of the reversing lever (7) and this extension is hinged on the hood or a component of (1) of the hood, **characterized in that** the reversing lever (7), at a distance from the hinge point (10) of the extension, is likewise hinged on the hood or a component of (1) of the hood, wherein the free end of the reversing lever (7) in the non-functional position grips over the hinge point (10) of the extension and is held in the over-gripping end region by the retaining means (9), so when the hood is shifted to the person-protection position, the extension of the second coupler (3) separates the reversing lever (7) from the retaining means (9).

3. Device according to claim 1 or 2, **characterized in that** the retaining means (9) is a resilient retaining clip, which with its resilient legs in the non-functional position locks the free end of the reversing lever (7), wherein part of the extension of the second coupler (3') is arranged between a base of the retaining clip, from which the resilient legs protrude, and the free end of the reversing lever (7), which when the hood is shifted to the person-protection position forces the reversing lever (7) out of the retaining clip.

4. Device according to anyone of claims 1 to 3, **characterized in that** the swivel path of the reversing lever (7) is limited.

5. Device according to anyone of claims 1 to 4, **characterized in that** the reversing lever (7) can be manually swivelled from the person-protection position to the normal functional position.

6. Device according to anyone of claims 1 to 5, **characterized in that** the free end of the reversing lever (7) and/or the back of the installation lever (5) is embodied as a sliding surface.

7. Device according to anyone of claims 1 to 6, **characterized in that** the reversing lever (7) can be shifted to the functional position by a spring, wherein the force of the spring is less than the retention force of the retaining means (9).

8. Device according to anyone of claims 2 to 7, **characterized in that** a projection (11), which protrudes in the direction of the installation lever (5) and on which the installation lever (5) in the released position rests, is provided on the extension of the second coupler (3') between the hinge region of the rockers (4) and the region, at which the free end of the reversing lever (7) is positioned in the non-functional position.

9. Device according to anyone of claims 1 to 8, **characterized in that** the installation lever (5) is held locked in the normal functional position and, in the released position, is pressed against the second coupler (3') or the extension of the second coupler (3') by means of an actuator, spring or similar actuating means.

## Revendications (Revendications pour l'(les) Etat(s) contractant(s) suivant(s): FR, GB, IT)

1. Dispositif pour déplacer un capot d'un véhicule automobile, notamment du capot avant, d'une position d'utilisation normale à une position de protection des personnes, qui est composé d'une articulation à charnière comprenant une première bielle (2) fixée au corps du véhicule ou formée par des éléments du corps du véhicule, une seconde bielle (3) fixée au capot, au moins une coulisse (4) reliant les bielles (2, 3) entre elles, ainsi qu'un levier d'élévation (5) se trouvant en position d'utilisation normale, qui est relié de manière articulée au corps de véhicule (6) par une extrémité et dont l'extrémité libre est située à proximité de la première bielle (2), sachant qu'en cas de déclenchement consécutif à un choc, le levier d'élévation (5) agit avec son extrémité libre sur la seconde bielle (3) ou sur un élément (1) du capot de manière à faire pivoter le capot vers le haut, et met le capot en position de protection des personnes, **caractérisé en ce qu'**un levier inverseur (7) est relié de manière articulée à la seconde bielle (3) ou à un élément (1) du capot, qui peut passer d'une position de non utilisation à une position d'utilisation dans laquelle il est appliqué contre le levier d'élévation (5) déclenché, si bien qu'en déplaçant le capot et/ou l'articulation à charnière de la position de protection des personnes à la position d'utilisation normale, le levier inverseur (7) peut mettre le levier d'élévation (5) dans la position d'utilisation normale précontrainte, ou **en ce qu'**un levier inverseur (7) est relié de manière articulée au levier d'élévation (5) qui peut être déplacé d'une position de non utilisation dans laquelle il est orienté approximativement parallèlement au levier inverseur (7), à une position d'utilisation dans laquelle, par l'intermédiaire du levier inverseur, il a pivoté vers un élément du capot (1) ou de la seconde bielle (3) et y prend appui, si bien qu'en déplaçant le capot et/ou l'articulation à charnière de la position de protection des personnes à la position d'utilisation normale, le levier d'élévation peut être mis par le levier inverseur (7) dans la position normale précontrainte.

2. Dispositif selon la revendication 1, **caractérisé en ce que** la course de pivotement du levier inverseur (7) est limitée.

3. Dispositif selon la revendication 1 ou 2, **caractérisé en ce qu'** il est possible de faire pivoter le levier inverseur (7) manuellement.

4. Dispositif selon l'une des revendications 1 à 3, **caractérisé en ce que** l'extrémité libre du levier inverseur (7) et/ou le dos du levier d'élévation (5) est réalisé(e) en tant que surface de glissement.

5. Dispositif selon l'une des revendications 1 à 3, **caractérisé en ce que** l'extrémité libre du levier inverseur (7) et/ou la surface d'appui pour le levier inverseur (7) sur l'élément du capot (1) ou sur la seconde bielle (3) est réalisée en tant que surface de glissement.

6. Dispositif selon l'une des revendications 1 à 5, **caractérisé en ce que** le levier inverseur (7) peut être mis en position d'utilisation par un ressort.

7. Dispositif selon l'une des revendications 1 à 6, **caractérisé en ce que** le levier inverseur (7) est relié de manière articulée par son extrémité libre ou à proximité de ladite extrémité à une coulisse (4) de l'articulation à charnière.

8. Dispositif selon la revendication 1, **caractérisé en ce que** la seconde bielle (3') est reliée de manière articulée au capot ou à un élément (1) du capot et **en ce que** le levier inverseur (7) relié de manière articulée au capot ou à un élément (1) du capot est maintenu par un moyen de fixation (9) en position de non utilisation lorsque les éléments sont en position d'utilisation normale, sachant que, lorsque les éléments ont été mis en position de protection des personnes par la seconde bielle (3'), le levier inverseur (7) est désolidarisé du moyen de fixation (9) et a pivoté ou peut être pivoté en position d'utilisation.

9. Dispositif selon la revendication 8, **caractérisé en ce que** la seconde bielle (3') est prolongée en direction du levier inverseur (7) et **en ce que** ledit prolongement est relié de manière articulée au capot ou à un élément (1) du capot, **en ce que** le levier inverseur (7) est également relié de façon articulée au capot ou à un élément (1) du capot à distance du point de fixation articulée (10) du prolongement, l'extrémité libre du levier inverseur (7) étant engagé par-dessus le point de fixation articulée (10) du prolongement en position de non utilisation et étant maintenu par le moyen de fixation (9) dans ladite zone d'extrémité engagée, si bien que, lorsque le capot est déplacé en position de protection des personnes, le prolongement de la seconde bielle (3) sépare le levier inverseur (7) du moyen de fixation (9).

10. Dispositif selon la revendication 8 ou 9, **caractérisé en ce que** le moyen de fixation (9) est un clip de fixation à ressort dont les branches faisant ressort bloquent, en position de non utilisation, l'extrémité libre du levier inverseur (7), sachant qu'entre une base du clip de fixation, dont font saillie les branches faisant ressort, et l'extrémité libre du levier inverseur (7) est disposée une partie du prolongement de la seconde bielle (3'), qui pousse le levier inverseur (7) hors du clip de fixation lorsque le capot est déplacé en position de protection des personnes.

11. Dispositif selon l'une des revendications 8 à 10, **caractérisé en ce que** la course du levier inverseur (7) est limitée.

12. Dispositif selon l'une des revendications 8 à 11, **caractérisé en ce qu'**il est possible de faire pivoter manuellement le levier inverseur (7) de la position de protection des personnes à la position d'utilisation normale.

13. Dispositif selon l'une des revendications 8 à 12, **caractérisé en ce que** l'extrémité libre du levier inverseur (7) et/ou le dos du levier d'élévation (5) est réalisé(e) en tant que surface de glissement.

14. Dispositif selon l'une des revendications 8 à 13, **caractérisé en ce que** le levier inverseur (7) peut être mis en position d'utilisation par un ressort, la force du ressort étant plus faible que la force de maintien du dispositif de fixation (9).

15. Dispositif selon l'une des revendications 9 à 14, **caractérisé en ce qu'**au niveau du prolongement de la seconde bielle (3'), entre la zone de fixation articulée des coulisses (4) et la zone dans laquelle est positionnée l'extrémité libre du levier inverseur (7) en position de non utilisation, est prévue une saillie (11) qui pointe en direction du levier d'élévation (5) et sur laquelle prend appui le levier d'élévation (5) en position déclenchée.

16. Dispositif selon l'une des revendications 8 à 15, **caractérisé en ce que** le levier d'élévation (5) est maintenu bloqué lorsqu'il est en position d'utilisation normale et est appuyé contre la seconde bielle (3') ou le prolongement de la seconde bielle (3') au moyen d'un actionneur, d'un ressort ou d'un actionneur analogue lorsqu'il est en position déclenchée.

## Revendications (Revendications pour l'(les) Etat(s) contractant(s) suivant(s): DE)

1. Dispositif pour déplacer un capot d'un véhicule automobile, notamment du capot avant, d'une position d'utilisation normale à une position de protection des personnes, qui est composé d'une articulation à charnière comprenant une première bielle (2) fixée au corps du véhicule ou formée par des éléments du corps du véhicule, une seconde bielle (3) fixée au capot, au moins une coulisse (4) reliant les bielles (2, 3) entre elles, ainsi qu'un levier d'élévation (5) se trouvant en position d'utilisation normale, qui est relié de manière articulée au corps de véhicule (6) par une extrémité et dont l'extrémité libre est située à proximité de la première bielle (2), sachant qu'en cas de déclenchement consécutif à un choc, le levier d'élévation (5) agit avec son extrémité libre sur la seconde bielle (3) ou sur un élément (1) du capot de manière à faire pivoter le capot vers le haut, et met le capot en position de protection des personnes, un levier inverseur (7) est relié de manière articulée à la seconde bielle (3) ou à un élément (I) du capot, qui peut passer d'une position de non utilisation à une position d'utilisation dans laquelle il est appliqué contre le levier d'élévation (5) déclenché, si bien qu'en déplaçant le capot et/ou l'articulation à charnière de la position de protection des personnes à la position d'utilisation normale, le levier inverseur (7) peut mettre le levier d'élévation (5) dans la position d'utilisation normale précontrainte, ou en ce qu'un levier inverseur (7) est relié de manière articulée au levier d'élévation (5) qui peut être déplacé d'une position de non utilisation dans laquelle il est orienté approximativement parallèlement au levier inverseur (7), à une position d'utilisation dans laquelle, par l'intermédiaire du levier inverseur, il a pivoté vers un élément du capot (1) ou de la seconde bielle (3) et y prend appui, si bien qu'en déplaçant le capot et/ou l'articulation à charnière de la position de protection des personnes à la position d'utilisation normale, le levier d'élévation peut être mis par le levier inverseur (7) dans la position normale précontrainte, **caractérisé en ce que** la seconde bielle (3') est reliée de manière articulée au capot ou à un élément (1) du capot et **en ce que** le levier inverseur (7) relié de manière articulée au capot ou à un élément (1) du capot est maintenu par un moyen de fixation (9) en position de non utilisation lorsque les éléments sont en position d'utilisation normale, sachant que, lorsque les éléments ont été mis en position de protection des personnes par la seconde bielle (3'), le levier inverseur (7) est désolidarisé du moyen de fixation (9) et a pivoté ou peut être pivoté en position d'utilisation.

2. Dispositif selon la revendication 1, **caractérisé en ce que** la seconde bielle (3') est prolongée en direction du levier inverseur (7) et **en ce que** ledit prolongement est relié de manière articulée au capot ou à un élément (1) du capot, **en ce que** le levier inverseur (7) est également relié de façon articulée au capot ou à un élément (1) du capot à distance du point de fixation articulée (10) du prolongement, l'extrémité libre du levier inverseur (7) étant engagé par-dessus le point de fixation articulée (10) du prolongement en position de non utilisation et étant maintenu par le moyen de fixation (9) dans ladite zone d'extrémité engagée, si bien que, lorsque le capot est déplacé en position de protection des personnes, le prolongement de la seconde bielle (3) sépare le levier inverseur (7) du moyen de fixation (9).

3. Dispositif selon la revendication 1 ou 2, **caractérisé en ce que** le moyen de fixation (9) est un clip de fixation à ressort dont les branches faisant ressort bloquent, en position de non utilisation, l'extrémité libre du levier inverseur (7), sachant qu'entre une base du clip de fixation, dont font saillie les branches faisant ressort, et l'extrémité libre du levier inverseur (7) est disposée une partie du prolongement de la seconde bielle (3'), qui pousse le levier inverseur (7) hors du clip de fixation lorsque le capot est déplacé en position de protection des personnes.

4. Dispositif selon l'une des revendications 1 à 3, **caractérisé en ce que** la course du levier inverseur (7) est limitée.

5. Dispositif selon l'une des revendications 1 à 4, **caractérisé en ce qu'**il est possible de faire pivoter manuellement le levier inverseur (7) de la position de protection des personnes à la position d'utilisation normale.

6. Dispositif selon l'une des revendications 1 à 5, **caractérisé en ce que** l'extrémité libre du levier inverseur (7) et/ou le dos du levier d'élévation (5) est réalisé(c) en tant que surface de glissement.

7. Dispositif selon l'une des revendications 1 à 6, **caractérisé en ce que** le levier inverseur (7) peut être mis en position d'utilisation par un ressort, la force du ressort étant plus faible que la force de maintien du dispositif de fixation (9).

8. Dispositif selon l'une des revendications 2 à 7, **caractérisé en ce qu'**au niveau du prolongement de la seconde bielle (3'), entre la zone de fixation articulée des coulisses (4) et la zone dans laquelle est positionnée l'extrémité libre du levier inverseur (7) en position de non utilisation, est prévue une saillie (11) qui pointe en direction du levier d'élévation (5) et sur laquelle prend appui le levier d'élévation (5) en position déclenchée.

9. Dispositif selon l'une des revendications 1 à 8, **caractérisé en ce que** le levier d'élévation (5) est maintenu bloqué lorsqu'il est en position d'utilisation normale et est appuyé contre la seconde bielle (3') ou le prolongement de la seconde bielle (3') au moyen d'un actionneur, d'un ressort ou d'un actionneur analogue lorsqu'il est en position déclenchée.
